# EUROPÄISCHE PATENTSCHRIFT

(11) **EP 0 771 477 B1**
(45) Veröffentlichungstag und Bekanntmachung des Hinweises auf die Patenterteilung: **11.03.1998**
(21) Anmeldenummer: 95920846.3
(22) Anmeldetag: 20.05.1995
(51) Int. Cl.: H01M 8/24, H01M 8/04

(54) **VERFAHREN UND VORRICHTUNG ZUM BETREIBEN EINER BRENNSTOFFZELLENANORDNUNG**
PROCESS AND DEVICE FOR OPERATING A FUEL CELL ARRANGEMENT
PROCEDE ET DISPOSITIF PERMETTANT DE FAIRE FONCTIONNER UN SYSTEME DE PILES A COMBUSTIBLE

(30) Priorität: 16.07.1994 DE 4425186
(43) Veröffentlichungstag der Anmeldung: 07.05.1997
(73) Patentinhaber: MTU Motoren- und Turbinen-Union Friedrichshafen GmbH, 88045 Friedrichshafen (DE)
(72) Erfinder: HUPPMANN, Gerhard, D-83620 Feldkirchen-Westerham (DE); KRAUS, Peter, D-85598 Baldham (DE)
(74) Vertreter: Winter, Josef
(86) Internationale Anmeldenummer: EP9501923
(87) Internationale Veröffentlichungsnummer: WO9602951

(56) Entgegenhaltungen:
- EP-A- 0 398 111
- WO-A-91/11034
- WO-A-94/29922
- US-A- 3 664 873
- US-A- 3 718 506
- PATENT ABSTRACTS OF JAPAN vol. 016 no. 539 (E-1289) ,10.November 1992 & JP,A,04 206362 (TONEN CORP) 28.Juli 1992,
- PATENT ABSTRACTS OF JAPAN vol. 018 no. 551 (E-1619) ,20.Oktober 1994 & JP,A,06 203859 (FUJI ELECTRIC CO LTD) 22.Juli 1994,

## Beschreibung

Die vorliegende Erfindung betrifft ein Verfahren und eine Vorrichtung zum Betreiben einer Brennstoffzellenanordnung, insbesondere ein Verfahren und eine Vorrichtung zum Betreiben einer durch in einem Stapel angeordnete Brennstoffzellen gebildeten und von einem Schutzgehäuse umgebenen Brennstoffzellenanordnung mit einem Anodeneingang zur Zuführung von Brenngas zu den Anoden der Brennstoffzellen, einem Anodenausgang zur Abführung des verbrannten Brenngases von den Anoden, einem Kathodeneingang zur Zuführung von Kathodengas zu den Kathoden der Brennstoffzellen und einem Kathodenausgang zur Abführung des verbrauchten Kathodengases von den Kathoden, wobei das Brenngas dem Anodeneingang über eine gegen den Innenraum des Schutzgehäuses abdichtende Brenngaseinlaßeinrichtung zugeführt wird.

Bei Brennstoffzellenanordnungen sind eine Anzahl von allgemein plattenförmigen Brennstoffzellen mit jeweils in einer ersten Richtung verlaufenden Kanälen für das Brenngas und jeweils in einer zweiten Richtung, senkrecht zur ersten Richtung, angeordneten Kanälen für das Kathodengas in Form eines Stapels derart angeordnet, daß an einer ersten Seite des Brennstoffzellenstapels ein Anodeneingang zur Zuführung von Brenngas zu den Anoden des Brennstoffzellenstapels, an der der ersten Seite gegenüberliegenden Seite ein Anodenausgang zur Abführung des verbrannten Brenngases von den Anoden, an einer zweiten Seite des Brennstoffzellenstapels ein Kathodeneingang zur Zuführung des Kathodengases zu den Kathoden des Brennstoffzellenstapels und an der der zweiten Seite gegenüberliegenden Seite ein Kathodenausgang zur Abführung des verbrauchten Kathodengases von den Kathoden gebildet wird. Bei Hochtemperaturbrennstoffzellen, wie bei Brennstoffzellen mit Alkalikarbonat-Schmelzelektrolyten (MCFC-Zellen) besteht eine Schwierigkeit in der gasdichten und zugleich elektrisch isolierenden Ausbildung von den hohen Betriebstemperaturen sowie den starken Temperaturschwankungen bei der Inbetriebnahme und Außerbetriebsetzung der Brennstoffzellenanordnung standhaltenden Zuführungen und Abführungen für das Brenngas und das Kathodengas (Manifolds) des Brennstoffzellenstapels. Undichte Gaszu- und -abführungen können zu Leckagen führen, womit z. B. die Gefahr von Deflagrationen verbunden ist.

Bei Brennstoffzellenanordnungen bekannter Art sind Gasverteiler als Gaseinlaßeinrichtungen und Gasauslaßeinrichtungen für das Brenngas und das Kathodengas zu den und von den Eingängen und Ausgängen der Anoden bzw. Kathoden entweder im Zellenstapel integriert (internal manifold) oder von außen an dem Zellenstapel angebracht (external manifold). Bei Brennstoffzellenanordnungen mit externen Gasverteilern sind diese herkömmlicherweise als haubenförmige Gaseinlaß- und Gasauslaßeinrichtungen an den vier Seiten des Brennstoffzellenstapels angeordnet. Die dadurch gebildete Anordnung ist außen mit einer Wärmeisolierung versehen und insgesamt in ein Schutzgehäuse eingebaut. Die Anschlüsse der Gasverteiler sind als Rohrleitungen mit zwischengeschalteten Ausgleichsbalgen durch die Wand des Schutzgehäuses geführt und an externe Einheiten und Aggregate angeschlossen. Hiermit sind eine Anzahl von Nachteilen verbunden. Dies sind: eine komplizierte Gasführung zwischen Brennstoffzellenanordnung und den externen Aggregaten und Einheiten, viele Schnittstellen und Rohrverbindungen, hohe Strömungswiderstände in den Rohrverbindungen und ein hoher Aufwand zur Abdichtung und elektrischen Isolierung zwischen dem Zellenstapel und den vier Gashauben unter den Bedingungen hoher Temperaturen und Temperaturänderungen, entsprechender thermischer Verformungen und hoher elektrischer Gleichspannung.

Die Aufgabe der vorliegenden Erfindung ist es, ein Verfahren und eine Vorrichtung zum Betreiben einer Brennstoffzellenanordnung der eingangs genannten Art zu schaffen, bei denen die Schwierigkeiten im Zusammenhang mit der Abdichtung der Eingänge und Ausgänge der Anoden und Kathoden des Brennstoffzellenstapels weitgehend vermieden werden.

Diese Aufgabe wird gemäß der vorliegenden Erfindung durch in den unabhängigen Ansprüchen angegebene Verfahren und Vorrichtung gelöst.

Ein wesentlicher Vorteil bei der vorliegenden Erfindung besteht darin, daß der Kathodengasstrom im Innenraum des thermisch isolierten Schutzgehäuses frei zirkuliert und der Anodenabgasstrom frei in diesen ausströmt, wodurch drei der vier gegen den Brennstoffzellenstapel abzudichtenden Gasverteiler entfallen können; lediglich der Gasverteiler auf der Anodeneingangsseite bleibt bestehen. Ein weiterer Vorteil der Erfindung besteht darin, daß durch das freie Ausströmen des Anodenabgasstroms in den in dem Schutzgehäuse zirkulierenden Kathodengasstrom jedwede schädliche Druckunterschiede zwischen dem Brenngas und dem Kathodengas vermieden werden.

Weitere Merkmale und Vorteile der vorliegenden Erfindung ergeben sich aus der folgenden Beschreibung von Ausführungsbeispielen anhand der Figuren.

In den Figuren zeigen:
Fig. 1a in der Draufsicht einen Schnitt durch ein Ausführungsbeispiel einer Brennstoffzellenanordnung mit vertikaler Anordnung der Brennstoffzellenstapel, bei der Vorrichtung und Verfahren nach der vorliegenden Erfindung verwirklicht werden;
Fig. 1b eine Frontansicht der in Fig. la gezeigten Brennstoffzellenanordnung;
Fig. 2a eine Brennstoffzellenanordnung entsprechend Fig. 1 in horizontaler Anordnung;
Fig. 2b eine Frontansicht der Anordnung gemäß Fig. 2a und
Fig. 3 eine Draufsicht im Schnitt durch eine Brennstoffzellenanordnung herkömmlicher Art.

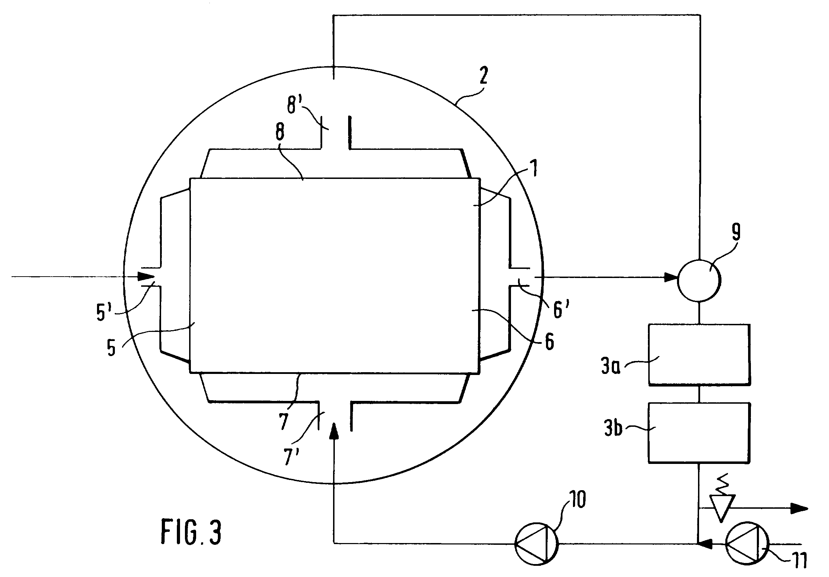

Zunächst soll anhand von Fig. 3 eine herkömmliche Anordnung von in einem Stapel angeordneten Brennstoffzellen mit jeweiligen an den Eingängen und Ausgängen der Anoden und Kathoden der Brennstoffzellen angeordneten Gaseinlaß- und -auslaßverteilern beschrieben werden.

In Fig. 3 ist eine durch einen Stapel von Brennstoffzellen gebildete Brennstoffzellenanordnung 1 von einem Schutzgehäuse 2 umgeben. Die Brennstoffzellenanordnung 1 verfügt über einen Anodeneingang 5 zur Zuführung von Brenngas zu den Anoden des Brennstoffzellenstapels auf der linken Seite der Brennstoffzellenanordnung 1, einen Anodenausgang 6 zur Abführung des verbrannten Brenngases von den Anoden auf der rechten Seite des Brennstoffzellenstapels, einen Kathodeneingang 7 zur Zuführung von Kathodengas zu den Kathoden des Brennstoffzellenstapels auf der vorderen Seite desselben, sowie einen Kathodenausgang 8 zur Abführung des verbrauchten Kathodengases von den Kathoden auf der Rückseite des Brennstoffzellenstapels. Zur Zuführung und Abführung des Brenngases und des Kathodengases zu und von den jeweiligen Eingängen und Ausgängen der Anoden und Kathoden sind über dem Anodeneingang 5 eine Brenngaseinlaßhaube 5', über dem Anodenausgang 6 eine Brenngasauslaßhaube 6', über dem Kathodeneingang 7 eine Kathodengaseinlaßhaube 7' und über dem Kathodenausgang 8 eine Kathodengasauslaßhaube 8' angeordnet, die jeweils gegen den Brennstoffzellenstapel abgedichtet sind. Die Zuführungen und Abführungen zu diesen Gaseinlaß- und Gasauslaßhauben sind in einer in Fig. 3 nicht näher dargestellten Weise über Ausgleichsbalgen zur Kompensation der Längenausdehnungen aufgrund der Temperaturunterschiede durch das Schutzgehäuse 2 nach außen geführt.

Über die Zuführung zu der Brenngaseinlaßhaube 5' wird von einer in der Fig. 3 nicht gezeigten Gasversorgungseinheit das Brenngas dem Anodeneingang 5 zugeführt. Das Kathodengas wird dem Kathodeneingang von einem Heißgasgebläse 10 zugeführt. Von dem dem Kathodeneingang 7 gegenüberliegenden Kathodenausgang 8 wird das verbrauchte Kathodengas abgeführt und diesem in einem Anodengaszumischer 9 das von dem dem Anodeneingang 5 gegenüberliegenden Anodenausgang 6 abgeführte verbrannte Brenngas als Anodenabgas beigemischt. Der Strom des Kathodenabgases mit dem beigemischten Anodenabgas wird zunächst durch einen katalytischen Brenner 3a und dann einen Wärmetauscher 3b zur Auskoppelung der Nutzwärme geführt. Der Ausgang des Wärmetauschers 3b ist mit dem Eingang des Heißgasgebläses 10 verbunden, so daß der Kreislauf für den Kathodengasstrom geschlossen wird. Nach dem Wärmetauscher 3b wird dem Kathodengasstrom über eine Abgasklappe das überschüssige Kathodenabgas entnommen und durch über ein Frischluftgebläse 11 zugeführte Frischluft ersetzt.

Die Gaseinlaß- und Gasauslaßhauben 5', 6', 7' und 8' sind jeweils gegen den Innenraum des Schutzgehäuses 2 abgedichtet. Jede dieser Abdichtungen muß in der Lage sein, einerseits die auftretenden hohen Temperaturen und Temperaturänderungen auszuhalten bei gleichzeitiger elektrischer Isolierung gegen die an den Brennstoffzellen anliegenden hohen Gleichspannungen.

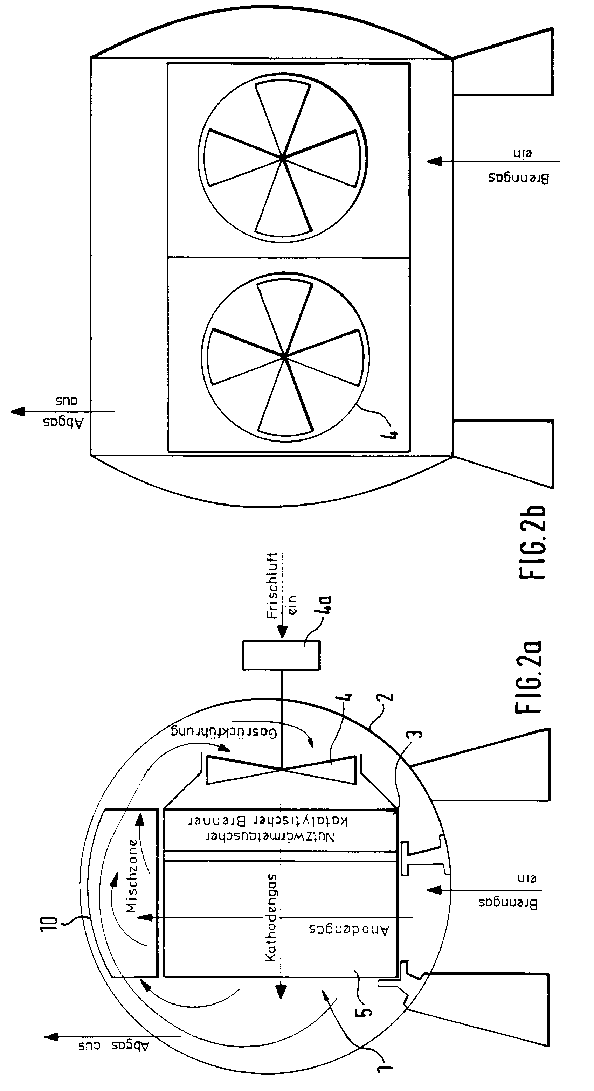

Bei der in Fig. 1a dargestellten erfindungsgemäßen Brennstoffzellenanordnung ist der Brennstoffzellenstapel 1 wiederum von einem Schutzgehäuse 2 umgeben. An dem Anodeneingang 5 ist eine Brenngaseinlaßeinrichtung 5' ähnlich der Gaseinlaßeinrichtung 5' bei der in Fig. 2 gezeigten herkömmlichen Brennstoffzellenanordnung vorgesehen. Über diese Brenngaseinlaßeinrichtung 5' wird das durch das Schutzgehäuse 5 zugeführte Brenngas dem Anodeneingang der Brennstoffzellen zugeführt. Anders als bei der herkömmlichen Anordnung öffnen sich jedoch sowohl der Anodenausgang 6 des Brennstoffzellenstapels zur Abgabe des verbrannten Brenngases als auch der Kathodenausgang 8 des Brennstoffzellenstapels zur Abgabe des verbrauchten Kathodengases in das Innere des Schutzgehäuses 2. Im Inneren des Schutzgehäuses 2 ist auch eine Gebläseeinrichtung 4 vorgesehen, durch die das Kathodengas zur Rückführung zum Kathodeneingang 7 des Brennstoffzellenstapels im Inneren des Schutzgehäuses in Zirkulation versetzt wird. Da sich der Anodenausgang 6 in das Innere des Schutzgehäuses 2 öffnet, wird das verbrannte Brenngas dem im Inneren des Schutzgehäuses 2 zirkulierenden Kathodengasstrom beigemischt. Ein Teil des im Inneren des Schutzgehäuses 2 zirkulierenden Gasgemischs wird durch von außen zugeführtes Frischgas ersetzt, das in einer später noch genauer zu beschreibenden Weise im Bereich des Kathodeneingangs 7 zugeführt wird.

Erfindungsgemäß wird somit das verbrauchte Kathodengas vom Kathodenausgang 8 in das Innere des Schutzgehäuses 2 abgegeben und zur Rückführung zum Kathodeneingang 7 im Inneren des Schutzgehäuses in Zirkulation versetzt, wobei das verbrannte Brenngas vom Anodenausgang 6 ebenfalls in das Innere des Schutzgehäuses abgegeben und dem dort zirkulierenden Kathodengasstrom beigemischt wird, wobei ein Teil dieses im Inneren des Schutzgehäuses zirkulierenden Gasgemischs durch von außen zugeführtes Frischgas ersetzt wird. Bei Bedarf kann in der Mischzone 9 des Anodenabgases mit dem Kathodenabgas eine katalytische Verbrennungseinheit 10 vorgesehen werden.

Vor dem Kathodeneingang 7 ist ein Wärmetauscher 3 angeordnet, der dazu dient, die Nutzwärme aus dem zirkulierenden Kathodengasstrom auszukoppeln. Dieser Wärmetauscher 3 ist an seiner Ausgangsseite unter Abdichtung gegen den Innenraum des Schutzgehäuses 2 mit dem Kathodeneingang 7 des Brennstoffzellenstapels 1 gekoppelt. Die dem im Inneren des Wärmetauschers 2 zirkulierenden Gasgemisch ausgesetzte Oberfläche des Wärmetauschers 3 kann mit einer katalytischen Beschichtung versehen sein, durch die die brennbaren Restbestandteile des dem zirkulierenden Kathodengas beigemischten Anodengases katalytisch verbrannt werden.

Die Gebläseeinrichtung 4, die zum Beispiel durch übliche Axialgebläse mit Lufthutzen 4b gebildet sein kann, verfügt über einen außerhalb des Schutzgehäuses 2 angeordneten Antrieb 4a, der mit der Gebläseeinrichtung 4 (dem Gebläserotor) über eine durch das Schutzgehäuse 2 geführte Antriebswelle gekoppelt ist. Diese Antriebswelle ist so ausgebildet, daß das Frischgas über die Antriebswelle zugeführt und die Welle und deren Lagerung sowie auch die Gebläseeinrichtung 4 dadurch gekühlt wird. Bei entsprechender hochtemperaturfester Ausbildung kann sich der Antrieb auch innerhalb des Schutzgehäuses befinden. Das überschüssige Abgas wird durch eine in der Figur nicht eigens dargestellte Überdruckklappe aus dem Schutzgehäuse 2 entfernt.

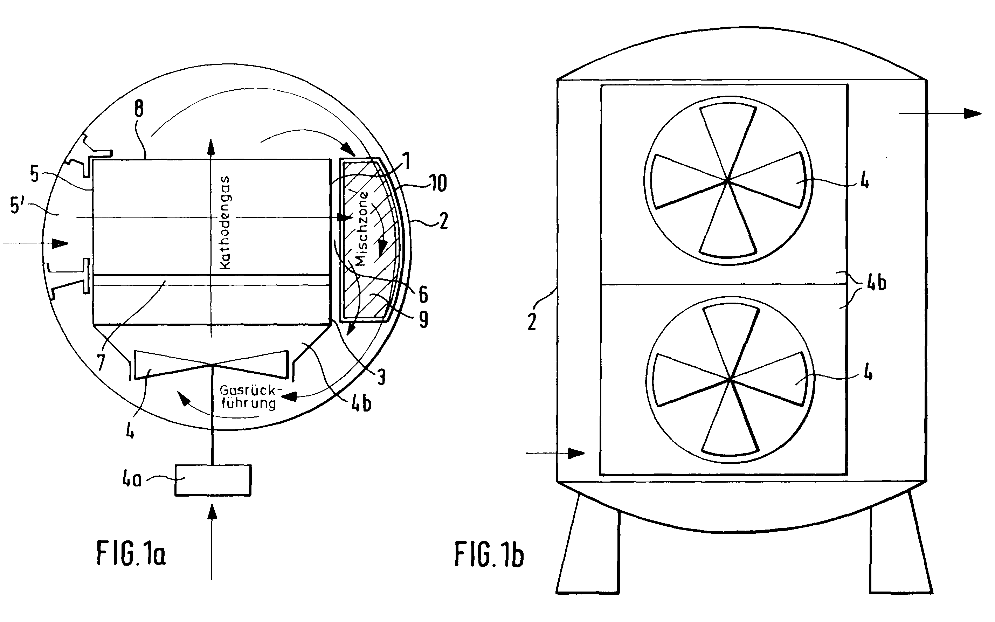

Fig. 1b zeigt in der Frontansicht der in Fig. 1a gezeigten Brennstoffzellenanordnung, daß bei dem Ausführungsbeispiel die Gebläseeinrichtung 4 durch zwei übereinander angeordnete Axialgebläse gebildet ist, wobei die beiden Axialgebläse jeweils durch die genannten Lufthutzen 4b mit der Eingangsseite des Wärmetauschers 3 gekoppelt sind.

Der Wärmetauscher 3 ist typischerweise unter Zwischenschaltung von in der Figur nicht eigens dargestellten Isolierbuchsen direkt an den oberen und unteren Endplatten des Brennstoffzellenstapels 1 angebracht. Die Abdichtung des umlaufenden Spaltes zwischen Wärmetauscher und Brennstoffzellenstapel kann zum Beispiel durch eine lose anliegende Weichdichtung, vorzugsweise eine Bürste aus Glas- oder Keramikfasern erfolgen. An die Dichtigkeit dieser Anordnung sind keine hohen Anforderungen gestellt.

Durch die vorliegende Erfindung wird eine Brennstoffzellenanordnung geschaffen, bei der drei der vier Gaseinlaß- und Gasauslaßhauben und die zugehörigen elektrisch isolierenden Dichtungen entfallen können. Aufgrund der großen Umwälzquerschitte und Vermeidung von Rohrleitungen ergeben sich niedrigste Strömungswiderstände, so daß die Verluste minimal sind. Durch die gute Durchmischung von verbranntem Anodengas und verbrauchtem Kathodengas sind Brenngasansammlungen unmöglich, die bei der herkömmlichen Anordnung aufgrund von Undichtigkeiten entstehen können. Da lediglich die Anodeneingangsseite mit einer Gaseinlaßhaube gekoppelt ist, sind auf drei Seiten des Brennstoffzellenstapels große Toleranzen zulässig, so daß mechanische Passungsprobleme und verformungsbedingte Verschiebungen zwischen den Gaseinlaß- und Gasauslaßhauben und dem Brennstoffzellenstapel wegfallen. Durch geringstmögliche Temperaturunterschiede in der Anordnung werden Wärmespannungen vermieden.

## Patentansprüche

1. Verfahren zum Betreiben einer durch in einem Stapel (1) angeordneten Brennstoffzellen gebildeten und von einem Schutzgehäuse (2) umgebenen Brennstoffzellenanordnung mit einem Anodeneingang (5) zur Zuführung von Brenngas zu den Anoden der Brennstoffzellen, einem Anodenausgang (6) zur Abführung des verbrannten Brenngases von den Anoden, einem Kathodeneingang (7) zur Zuführung von Kathodengas zu den Kathoden der Brennstoffzellen und einem Kathodenausgang (8) zur Abführung des verbrauchten Kathodengases von den Kathoden, wobei das Brenngas dem Anodeneingang (5) über eine gegen den Innenraum des Schutzgehäuses (2) abdichtende Brenngaseinlaßeinrichtung (5') zugeführt wird, dadurch gekennzeichnet, daß das verbrauchte Kathodengas vom Kathodenausgang (8) in das Innere des Schutzgehäuses (2) abgegeben und zur Rückführung zum Kathodeneingang (7) im Inneren des Schutzgehäuses in Zirkulation versetzt wird, daß das verbrannte Brenngas vom Anodenausgang (6) in das Innere des Schutzgehäuses (2) abgegeben und dem im Inneren des Schutzgehäuses (2) zirkulierenden Kathodengasstrom beigemischt wird, und daß ein Teil des im Inneren des Schutzgehäuses (2) zirkulierenden Gasgemischs durch von außen zugeführtes Frischgas ersetzt wird.

2. Verfahren nach Anspruch 1, dadurch gekennzeichnet, daß das Frischgas im Bereich des Kathodeneingangs (7) zugeführt wird.

3. Verfahren nach Anspruch 1 oder 2, dadurch gekennzeichnet, daß das Kathodengas durch eine im Inneren des Schutzgehäuses (2) angeordnete Gebläseeinrichtung (4) in Zirkulation versetzt wird.

4. Verfahren nach Anspruch 1, 2 oder 3 dadurch gekennzeichnet, daß das zirkulierende Kathodengas zur Auskopplung von Nutzwärme durch einen Wärmetauscher (3) geführt wird.

5. Verfahren nach Anspruch 1, 2, 3 oder 4, dadurch gekennzeichnet, daß das zirkulierende Kathodengas zur Verbrennung von brennbaren Restbestandteilen des beigemischten Anodengases durch eine katalytische Verbrennungseinrichtung geführt wird.

6. Verfahren nach Anspruch 4 oder 5, dadurch gekennzeichnet. daß die katalytische Verbrennung im Wärmetauscher (3) erfolgt.

7. Vorrichtung zum Betreiben einer durch in einem Stapel (1) angeordneten Brennstoffzellen gebildeten und von einem Schutzgehäuse (2) umgebenen Brennstoffzellenanordnung mit einem Anodeneingang (5) zur Zuführung von Brenngas zu den Anoden der Brennstoffzellen, einem Anodenausgang (6) zur Abführung des verbrannten Brenngases von den Anoden, einem Kathodeneingang (7) zur Zuführung von Kathodengas zu den Kathoden der Brennstoffzellen und einem Kathodenausgang (8) zur Abführung des verbrauchten Kathodengases von den Kathoden, sowie mit einer gegen den Innenraum des Schutzgehäuses (2) abdichtenden Brenngaseinlaßeinrichtung (5') zur Zuführung des Brenngases zu dem Anodeneingang (5), dadurch gekennzeichnet, daß sich der Kathodenausgang (8) des Brennstoffzellenstapels zur Abgabe des verbrauchten Kathodengases in das Innere des Schutzgehäuses (2) öffnet, daß im Inneren des Schutzgehäuses (2) eine Gebläseeinrichtung (4) vorgesehen ist, durch die das Kathodengas zur Rückführung zum Kathodeneingang (7) des Brennstoffzellenstapels im Inneren des Schutzgehäuses (2) in Zirkulation versetzt wird, daß sich der Anodenausgang (6) des Brennstoffzellenstapels zur Abgas des verbrannten Anodengases in das Innere des Schutzgehäuses (2) öffnet, so daß das verbrauchte Anodengas dem im Inneren des Schutzgehäuses (2) zirkulierenden Kathodengasstrom beigemischt, und daß Mittel vorgesehen sind, durch die ein Teil des im Inneren des Schutzgehäuses (2) zirkulierenden Gasgemisches durch von außen zugeführtes Frischgas ersetzt wird.

8. Vorrichtung nach Anspruch 7, dadurch gekennzeichnet, daß im Inneren des Schutzgehäuses (2) ein Wärmetauscher (3) zur Auskopplung von Nutzwärme aus dem zirkulierenden Kathodengasstrom vorgesehen ist.

9. Vorrichtung nach Anspruch 8, dadurch gekennzeichnet, daß der Wärmetauscher (3) vor dem Kathodeneingang (7) des Brennstoffzellenstapels angeordnet ist.

10. Vorrichtung nach Anspruch 9, dadurch gekennzeichnet, daß der Raum zwischen der Ausgangsseite des Wärmetauschers (3) und dem Kathodeneingang gegen das Innere des Schutzgehäuses (2) abgedichtet ist.

11. Vorrichtung nach Anspruch 8, 9 oder 10, dadurch gekennzeichnet, daß Mittel zur katalytischen Verbrennung von brennbaren Restbestandteilen des dem zirkulierenden Kathodengasstrom beigemischten Anodengases vorgesehen ist.

12. Vorrichtung nach Anspruch 11, dadurch gekennzeichnet, daß die Mittel zur katalytischen Verbrennung durch eine katalytische Beschichtung der dem zirkulierenden Gasgemisch ausgesetzten Oberfläche des Wärmetauschers (3) gebildet sind.

13. Vorrichtung nach einem der Ansprüche 6 bis 12, dadurch gekennzeichnet, daß die Gebläseeinrichtung (4) einen außerhalb des Schutzgehäuses (2) angeordneten Antrieb (4a) aufweist, der mit der Gebläseeinrichtung (4) über eine durch das Schutzgehäuse (2) geführte Antriebswelle gekoppelt ist, welche so ausgebildet ist, daß das Frischgas über die Antriebswelle zu deren Kühlung zuführbar ist.

14. Vorrichtung nach einem der Ansprüche 7 bis 13, dadurch gekennzeichnet, daß eine Überdruckklappe zur Abgabe des überschüssigen Abgases aus dem Schutzgehäuse (2) vorgesehen ist.

15. Vorrichtung nach einem der Ansprüche 8 bis 14, dadurch gekennzeichnet, daß der Wärmetauscher (3) an oberen und unteren Endplatten des Brennstoffzellenstapels (1) befestigt ist.

16. Vorrichtung nach einem der Ansprüche 9 bis 15, dadurch gekennzeichnet, daß zwischen Wärmetauscher (3) und Brennstoffzellenstapel (1) ein umlaufender Spalt vorgesehen ist, der durch eine laufende Dichtung abgedichtet ist.

17. Vorrichtung nach Anspruch 16, dadurch gekennzeichnet, daß die Abdichtung durch eine Bürste oder Glas- oder Keramikfasern gebildet ist.

## Claims

1. Method for operating a fuel cell arrangement which is formed by fuel cells arranged in a stack (1) and is surrounded by a protective housing (2), the arrangement comprising an anode inlet (5) for supplying fuel gas to the anodes of the fuel cells, an anode outlet (6) for removing the burnt fuel gas from the anodes, a cathode inlet (7) for supplying cathode gas to the cathodes of the fuel cells and a cathode outlet (8) for removing the spent cathode gas from the cathodes, the fuel gas being supplied to the anode inlet (5) via a fuel gas inlet means (5') which provides a seal with respect to the inner chamber of the protective housing (2), characterized in that the spent cathode gas is discharged from the cathode outlet (8) into the interior of the protective housing (2) and, for the purpose of being returned to the cathode inlet (7), is caused to circulate in the interior of the protective housing, in that the burnt fuel gas is discharged from the anode outlet (6) into the interior of the protective housing (2) and is admixed to the cathode gas stream circulating in the interior of the protective housing (2), and in that a portion of the gas mixture circulating in the interior of the protective housing (2) is replaced by fresh gas supplied from outside.

2. Method according to Claim 1, characterized in that the fresh gas is supplied at or near the cathode inlet (7).

3. Method according to Claim 1 or 2, characterized in that the cathode gas is caused to circulate by a blower unit (4) disposed in the interior of the protective housing (2).

4. Method according to Claim 1, 2 or 3, characterized in that the circulating cathode gas, for the purpose of extracting useful heat, is passed through a heat exchanger (3).

5. Method according to Claim 1, 2, 3 or 4, characterized in that the circulating cathode gas, for the purpose of burning combustible residual constituents of the admixed anode gas, is passed through a catalytic combustion unit.

6. Method according to Claim 4 or 5, characterized in that the catalytic combustion takes place in the heat exchanger (3).

7. Apparatus for operating a fuel cell arrangement which is formed by fuel cells arranged in a stack (1) and is surrounded by a protective housing (2), the arrangement comprising an anode inlet (5) for supplying fuel gas to the anodes of the fuel cells, an anode outlet (6) for removing the burnt fuel gas from the anodes, a cathode inlet (7) for supplying cathode gas to the cathodes of the fuel cells and a cathode outlet (8) for removing the spent cathode gas from the cathodes, and comprising a fuel gas inlet unit (5') which provides a seal with respect to the inner chamber of the protective housing (2) and is designed for supplying the fuel gas to the anode inlet (5), characterized in that the cathode outlet (8) of the fuel cell stack for discharging the spent cathode gas opens into the interior of the protective housing (2), in that a blower unit (4), in the interior of the protective housing (2) is provided by which the cathode gas, for the purpose of being returned to the cathode inlet (7) of the fuel cell stack, is caused to circulate in the interior of the protective housing (2), in that the anode outlet (6) of the fuel cell stack, for the purpose of discharging the burnt anode gas, opens into the interior of the protective housing (2), so that the spent anode gas is admixed to the cathode gas stream circulating in the interior of the protective housing (2), and in that means are provided by which a portion of the gas mixture circulating in the interior of the protective housing (2) is replaced by fresh gas supplied from outside.

8. Apparatus as claimed in Claim 7, characterized in that a heat exchanger (3) is provided in the interior of the protective housing (2) for extracting useful heat from the circulating cathode gas stream.

9. Apparatus according to Claim 8, characterized in that the heat exchanger (3) is arranged in front of the cathode inlet (7) of the fuel cell stack.

10. Apparatus according to Claim 9, characterized in that the space between the outlet side of the heat exchanger (3) and the cathode inlet is sealed off from the interior of the protective housing (2).

11. Apparatus according to Claim 8, 9 or 10, characterized in that means are provided for the catalytic combustion of combustible residual constituents of the anode gas admixed to the circulating cathode gas stream.

12. Apparatus according to Claim 11, characterized in that the means for the catalytic combustion are formed by a catalytic coating of the heat exchanger (3) surface which is exposed to the circulating gas mixture.

13. Apparatus according to any one of Claims 6 to 12, characterized in that the blower unit (4) has a drive (4a) which is disposed outside the protective housing (2) and is coupled to the blower unit (4) via a drive shaft which is run through the protective housing (2) and which is of such a design that the fresh gas can be supplied via the drive shaft to cool it.

14. Apparatus according to any one of Claims 7 to 13, characterized in that a pressure-relief valve is provided for discharging the excess waste gas from the protective housing (2).

15. Apparatus according to any one of Claims 8 to 14, characterized in that the heat exchanger (3) is fastened to top and bottom end plates of the fuel cell stack (1).

16. Apparatus according to any one of Claims 9 to 15, characterized in that a circumferential gap is provided between heat exchanger (3) and fuel cell stack (1), said gap being sealed by a dynamic seal.

17. Apparatus according to Claim 16, characterized in that the seal is formed by a brush or glass fibres or ceramic fibres.

## Revendications

1. Procédé permettant de faire fonctionner un système de piles à combustible, formé par des piles à combustible disposées dans un empilement (1) et entouré d'un boîtier de protection (2), ayant une entrée d'anodes (5) pour l'apport de gaz combustible aux anodes des piles à combustible, une sortie d'anodes (6) pour l'évacuation du gaz combustible brûlé en provenance des anodes, une entrée de cathodes (7) pour l'apport de gaz de cathodes aux cathodes des piles à combustible, et une sortie de cathodes (8) pour l'évacuation du gaz de cathodes consommé en provenance des cathodes, le gaz combustible étant acheminé à l'entrée d'anodes (5) par l'intermédiaire d'un dispositif d'admission de gaz combustible (5'), rendu étanche vis-à-vis de l'espace interne du boîtier de protection (2), caractérisé en ce que le gaz de cathodes consommé en provenance de la sortie de cathodes (8) est dégagé à l'intérieur du boîtier de protection (2), et est mis en circulation en vue du renvoi vers l'entrée de cathodes (7) à l'intérieur du boîtier de protection, en ce que le gaz combustible brûlé en provenance de la sortie d'anodes (6) est dégagé à l'intérieur du boîtier de protection (2) et est mélangé au courant de gaz de cathodes circulant à l'intérieur du boîtier de protection (2), et en ce qu'une partie du mélange gazeux circulant à l'intérieur du boîtier de protection (2) est remplacé par du gaz frais acheminé de l'extérieur.

2. Procédé selon la revendication 1, caractérisé en ce que le gaz frais est acheminé dans le domaine de l'entrée de cathodes (7).

3. Procédé selon la revendication 1 ou 2, caractérisé en ce que le gaz de cathodes est mis en circulation par un dispositif de soufflante (4) disposé à l'intérieur du boîtier de protection (2).

4. Procédé selon la revendication 1, 2 ou 3, caractérisé en ce que le gaz de cathodes circulant est conduit, en vue de l'extraction de la chaleur utile, à travers un échangeur thermique (3).

5. Procédé selon la revendication 1, 2, 3 ou 4, caractérisé en ce que le gaz de cathodes en circulation est acheminé, en vue de la combustion des constituants résiduels combustibles du gaz d'anodes qui y est mélangé, à travers un dispositif de combustion catalytique.

6. Procédé selon la revendication 4 ou 5, caractérisé en ce que la combustion catalytique se fait dans l'échangeur thermique (3).

7. Dispositif permettant de faire fonctionner un système de piles à combustible, formé par des piles à combustible disposées dans un empilement (1) et entouré d'un boîtier de protection (2), ayant une entrée d'anodes (5) pour l'apport de gaz combustible aux anodes des piles à combustible, une sortie d'anodes (6) pour l'évacuation du gaz combustible brûlé en provenance des anodes, une entrée de cathodes (7) pour l'apport de gaz de cathodes aux cathodes des piles à combustible, et une sortie de cathodes (8) pour l'évacuation du gaz de cathodes consommé en provenance des cathodes, ainsi qu'un dispositif d'admission de gaz combustible (5'), rendu étanche vis-à-vis de l'espace interne du boîtier de protection (2) pour l'apport de gaz combustible à l'entrée d'anodes (5), caractérisé en ce que la sortie de cathodes (8) de l'empilement de piles à combustible s'ouvre en vue du dégagement du gaz de cathodes consommé à l'intérieur du boîtier de protection (2), en ce qu'à l'intérieur du boîtier de protection (2) est prévu un dispositif de soufflante (4), par lequel le gaz de cathodes est mis en circulation en vue du retour vers l'entrée de cathodes (7) de l'empilement de piles à combustibles à l'intérieur du boîtier de protection (2), en ce que la sortie de cathodes (6) de l'empilement de piles à combustible s'ouvre en vue du rejet du gaz d'anodes brûlé à l'intérieur du boîtier de protection (2), de sorte que le gaz d'anodes consommé soit mélangé au courant de gaz de cathodes circulant à l'intérieur du boîtier de protection (2), et en ce que des moyens sont prévus, grâce auxquels une partie du mélange gazeux circulant à l'intérieur du boîtier de protection (2) est remplacée par du gaz frais acheminé de l'extérieur.

8. Dispositif selon la revendication 7, caractérisé en ce qu'il est prévu, à l'intérieur du boîtier de protection (2), un échangeur thermique (3) pour l'extraction de la chaleur utile en provenance du courant de gaz de cathodes en circulation.

9. Dispositif selon la revendication 8, caractérisé en ce que l'échangeur thermique (3) est disposé avant l'entrée de cathodes (7) de l'empilement de piles à combustible.

10. Dispositif selon la revendication 9, caractérisé en ce que l'espace compris entre le côté de sortie de l'échangeur thermique (3) et l'entrée de cathodes est rendu étanche vis-à-vis de l'intérieur du boîtier de protection (2).

11. Dispositif selon la revendication 8, 9 ou 10, caractérisé en ce qu'il est prévu des moyens en vue de la combustion catalytique des constituants résiduels combustibles du gaz d'anodes mélangé au courant de gaz de cathodes en circulation.

12. Dispositif selon la revendication 11, caractérisé en ce que les moyens en vue de la combustion catalytique sont formés par un revêtement catalytique de la surface de l'échangeur thermique (3) exposée au mélange gazeux en circulation.

13. Dispositif selon l'une quelconque des revendications 6 à 12, caractérisé en ce que le dispositif de soufflante (4) présente un entraînement (4a) disposé à l'extérieur du boîtier de protection (2), qui est couplé avec le dispositif de soufflante (4) par l'intermédiaire d'un arbre d'entraînement passant à travers le boîtier de protection (2), lequel arbre est construit de telle sorte que le gaz frais puisse être acheminé sur l'arbre d'entraînement en vue de son refroidissement.

14. Dispositif selon l'une quelconque des revendications 7 à 13, caractérisé en ce qu'un clapet de surpression est prévu en vue du rejet du gaz de rejet en excès en provenance du boîtier de protection (2).

15. Dispositif selon l'une quelconque des revendications 8 à 14, caractérisé en ce que l'échangeur thermique (3) est fixé aux plaques d'extrémité inférieure et supérieure de l'empilement de piles à combustible (1).

16. Dispositif selon l'une quelconque des revendications 9 à 15, caractérisé en ce qu'il est prévu, entre l'échangeur thermique (3) et l'empilement de piles à combustible (1), une fente circulaire, qui est rendue étanche grâce à un joint d'étanchéité périphérique.

17. Dispositif selon la revendication 16, caractérisé en ce que le joint d'étanchéité est formé par une brosse ou des fibres de verre ou de céramique.
